# EUROPÄISCHE PATENTSCHRIFT

(11) **EP 0 769 541 B1**
(45) Veröffentlichungstag und Bekanntmachung des Hinweises auf die Patenterteilung: **12.06.2002**
(21) Anmeldenummer: 96116416.7
(22) Anmeldetag: 14.10.1996
(51) Int. Cl.: C09K 3/18

(54) **Polymerverdicktes Enteisungsmittel und Vereisungsschutzmittel für Flugzeuge**
Polymer-thickened de-icing material and anti-icer for planes
Matériau de dégivrage épaissi par polymère et produit anti-givre pour les avions

(30) Priorität: 18.10.1995 DE 19538607
(43) Veröffentlichungstag der Anmeldung: 23.04.1997
(73) Patentinhaber: Clariant GmbH, 65929 Frankfurt am Main (DE)
(72) Erfinder: Pöllmann, Klaus, Dr., 84489 Burghausen (DE); Kapfinger, Josef, 84326 Falkenberg (DE)

(56) Entgegenhaltungen:
- EP-A- 0 231 869
- EP-A- 0 360 183
- EP-A- 0 487 190
- DE-A- 2 423 893
- DE-A- 4 412 790
- US-A- 5 273 673

## Beschreibung

Die Erfindung betrifft ein Enteisungs- und Vereisungsschutzmittel für Flugzeuge auf der Basis von Glykolen und Wasser und mit wasserlöslichen vernetzten Acrylpolymeren als Verdicker.

Enteisungs- und Vereisungsschutzmittel für Flugzeuge (im folgenden der Kürze halber einfach Enteisungsmittel oder Enteisungsflüssigkeiten genannt) werden zur Entfernung von Eis, Schnee und/oder Reif von Flugzeugoberflächen und zur Vermeidung derartiger Ablagerungen auf diesen Flächen eingesetzt. Die Zeitspanne, in der die Enteisungsflüssigkeit Schutz gegen die Wiederbildung von Eis, Schnee und/oder Reif am Flugzeug gibt, wird als Wiedervereisungsschutzzeit oder Holdovertime bezeichnet. In "Recommandations for De-/Anti-Icing of Aircraft on the Ground" (Edition März 1993) der Association of European Airlines (AEA) und in den International Standardisation Organisation (ISO) Spezifikationen 11075, 11076 und 11078 werden unverdickte (Typ I) und verdickte (Typ II) Flugzeugenteisungsflüssigkeiten spezifiziert. Typ-II-Flüssigkeiten besitzen aufgrund des Verdickungsmittels eine pseudoplastische Konsistenz (Nicht-Newtonsche Rheologie).

Von Typ-II-Flugzeugenteisungsmitteln wird insbesondere erwartet, daß sie einen möglichst langen Schutz gegen Wiedervereisung der Tragflachen vor dem Start unter extremen Wetterbedingungen wie Schneefall oder gefrierendem Regen und gutes Abfließen beim Start des Flugzeuges aufweisen. So fordert die ISO-Norm 11078, die 1993 in Kraft getreten ist, hinsichtlich Schutzzeit gegen Wiedervereisung mindestens 30 Minuten bei -5 °C im sogenannten "Water Spray Endurance Test" [die Enteisungsflüssigkeit wird vorher 5 Minuten lang einer Scherbelastung von 3500 Umdrehungen pro Minute (Upm) ausgesetzt]. Nach neuesten Forderungen einiger Fluggesellschaften sollte der Wert der Wiedervereisungsschutzzeit sogar deutlich über den genannten 30 Minuten liegen, bei gleichzeitig bestmöglichem Abfließverhalten. Das Abfließverhalten ist grundsätzlich um so besser, je niedriger die Viskosität der Enteisungsflüssigkeit bei der herrschenden Außentemperatur ist.

Es ist nicht schwer, die geforderten Werte für eine der beiden Eigenschaften (Holdovertime und Abfließverhalten) ohne Berücksichtigung der anderen zu erreichen. So läßt sich eine lange Wiedervereisungsschutzzeit ohne weiteres mit einem besonders hochmolekularen Verdicker erhalten. Der davon resultierende hochviskose Film bleibt lang am ruhenden Flugzeug unverändert bestehen und gewährleistet die angestrebte lange Holdovertime. Der Film wird aber aufgrund seiner hohen Ruheviskositat und Fließgrenze beim Start des Flugzeugs nicht genügend schnell abfließen. Ein gutes Abfließverhalten zeigen Flüssigkeiten, die einen relativ niedrigviskosen Film bilden. Da solche Filme eher unstabil sind und schon nach kurzer Zeit verspreizen, können sie den geforderten Schutz gegen Wiedervereisung nicht geben. Die beiden Eigenschaften, Holdovertime und Abfließverhalten, sind also zueinander kontrar.

Es sind schon zahlreiche Versuche unternommen worden zur Bereitstellung von verdickten Enteisungsflüssigkeiten mit einem langen Schutz gegen Wiedervereisung und mit einem guten Abfließverhalten. So sollen die beiden Eigenschaften gemäß US-A-5 118 435 dann erhalten werden, wenn als Verdicker eine Mischung (Blend) aus einem Acrylhomopolymeren mit einem mittleren Molekulargewicht von etwa 2 500 000 bis etwa 3 500 000 und einem Acrylcopolymeren eingesetzt wird, und gemäß US-A-5 273 673, wenn die Enteisungsflüssigkeit die genannte Verdickermischung und zusätzlich dazu ein nichtionisches Tensid aus der Gruppe der Alkylphenolethoxylate und ein anionisches Tensid aus der Gruppe der Alkylarylsulfonate enthält.

Gemäß US-A-5 334 323 (EP-A-360 183) erhält man die angestrebten Eigenschaften bei verdickten Flugzeugenteisungsflüssigkeiten auf der Basis von Glykolen und Wasser, wenn man vernetzte Polyacrylsäure allein einsetzt und zusätzlich dazu ein nichtionisches Tensid aus der Gruppe der alkoxylierten höheren Alkohole und den pH-Wert der Flüssigkeit mit Natriumhydroxid oder Natrium- und Kaliumhydroxid in einem bestimmten Verhältnis zueinander einstellt. Als mögliche Acrylsäurehomopolymerisate werden zwar all jene hingestellt, die in Form einer 0,5gew.%igen wäßrigen Lösung bei einem pH-Wert von 7,0 eine Viskosität von 5000 bis 60 000 mPa · s bei 20 °C, gemessen mit einem Brookfield-Viskosimeter bei 20 Upm, aufweisen. Im einzelnen wird jedoch nur ®CARBOPOL 934 der Firma B.F. Goodrich Chemical GmbH, Deutschland, genannt und empfohlen. Wie die Broschüre GC-67 aus dem Jahre 1984 (deutsche Übersetzung) der Firma B.F. Goodrich Chemical GmbH über ihre Carbopol-Produkte zeigt (vergleiche Tabelle 1 auf Seite 3 und die Seiten 20 und 43), hat ®CARBOPOL 934 ein Molekulargewicht von etwa 3 000 000 und in Form der genannten 0,5gew.%igen wäßrigen Lösung eine Viskosität von etwa 30 500 bis 39 400 mPa · s. Das in US-A-5 334 323 benützte Acrylsäurehomopolymer ist also (ebenso wie das in den beiden zuerst genannten US-Patenten empfohlene) hochmolekular und hochviskos.

Erwähnt sei auch noch Chemical Abstracts 108: 223487p (1988) des rumänischen Patentes RO 92,551. Hier werden Flugzeugenteisungsmittel beschrieben, die Filme mit hohem Scherwiderstand bilden und aus Propylenglykol, Polyacrylamid, Natriumbiphosphat oder Borax, ethoxyliertem Nonylphenol oder ethoxyliertem Oleylalkohol mit einem Ethoxylierungsgrad von 17 und Wasser in einer jeweils bestimmten Menge bestehen.

Der genannte Stand der Technik vermittelt also die Lehre, daß zur Erreichung der angestrebten Eigenschaften Acrylhomopolymere mit hohem Molekulargewicht (etwa 2 500 000 bis 3 500 000) und hoher Viskosität (etwa 30 000 bis 40 000 mPa · s) eingesetzt werden müssen.

Es wurde nun gefunden, daß man verdickte Flugzeugenteisungsflüssigkeiten auf der Basis von Glykolen und Wasser mit einer langen Holdovertime und einem guten Abfließverhalten gerade dann erhalt, wenn man ein Acrylhomopolymer oder eine Mischung von Acrylhomopolymeren mit einem relativ niedrigen Molekulargewicht und einer relativ niedrigen Viskosität einsetzt in Kombination mit einem alkoxylierten höheren Alkohol und einer wasserlöslichen Salzverbindung, so daß eine bestimmte Salzkonzentration in der Flüssigkeit vorliegt. Dies ist ein ganz unerwartetes Ergebnis. Die erfindungsgemäße Dreierkombination, bestehend aus dem genannten mittelmolekularen und auch mittelviskosen Verdicker, dem genannten nichtionischen Tensid und der genannten Salzverbindung, bewirkt offensichtlich synergistisch ein solches Viskositätsverhalten der Enteisungsflüssigkeit, daß sowohl eine lange Holdovertime als auch ein gutes Abfließverhalten resultiert.

Das erfindungsgemäße polymerverdickte Enteisungsmittel und Vereisungsschutzmittel besteht im wesentlichen aus
a) 35 bis 70 Gew.-%, vorzugsweise 40 bis 60 Gew.-%, von mindestens einem Alkylenglykol mit 2 bis 3 Kohlenstoffatomen oder Oxalkylenglykol mit 4 bis 6 Kohlenstoffatomen oder einer Mischung davon,
b) 0,05 bis 1,5 Gew.-%, vorzugsweise 0,1 bis 1 Gew.-%, von einem wasserlöslichen vernetzten Homopolymer der Acrylsäure oder Methacrylsäure oder einer Mischung von solchen Homopolymeren, wobei das Homopolymer und die Mischung jeweils ein mittleres Molekulargewicht von 750 000 bis 1 250 000 hat und jeweils in Form einer 0,5gew.%igen wäßrigen Lösung mit einem pH-Wert von 7,0 und einer Temperatur von 20 °C eine Viskosität von 1000 bis 13 000 mPa · s aufweist, gemessen mit einem Brookfield-Viskosimeter bei 20 Upm,
c) 0,02 bis 1,5 Gew.-%, vorzugsweise 0,05 bis 1 Gew.-%, von mindestens einem nichtionischen Tensid, gebildet aus einem Alkohol mit 6 bis 22 Kohlenstoffatomen, vorzugsweise 8 bis 18 Kohlenstoffatomen, der mit 1 bis 10 Molekülen von einem niedermolekularen Alkylenoxid umgesetzt ist,
d) 0,03 bis 1 Gew.-%, vorzugsweise 0,05 bis 0,4 Gew.-%, von mindestens einer wasserlöslichen Salzverbindung von einer anorganischen Säure oder einer Carbonsäure oder einer Mischung davon,
e) 0,01 bis 1 Gew.-%, vorzugsweise 0,03 bis 0,7 Gew.-%, von mindestens einer Imidazolverbindung oder einer Triazolverbindung oder einer Mischung davon als Korrosionsinhibitor und
f) Wasser als Rest auf 100 Gew.-%,
Gewichtsprozente bezogen auf das Mittel.

Die Komponente a) ist vorzugsweise Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt sind. Die Glykole dienen vor allem zur Erniedrigung des Gefrierpunktes und stellen neben Wasser die Hauptkomponente der Flüssigkeit dar.

Die Komponente b) ist ein wasserlösliches vernetztes Acrylsäurehomopolymer oder ein wasserlösliches vernetztes Methacrylsäurehomopolymer mit einem bestimmten Molekulargewicht, nämlich 750 000 bis 1 250 000, und einer bestimmten Viskosität, nämlich 1000 bis 13 000 mPa · s, vorzugsweise 2000 bis 7000 mPa · s, gemessen mit einem Brookfield-Viskosimeter bei 20 Upm an einer 0,5gew.%igen wäßrigen Lösung (des Polymeren) mit einem pH-Wert von 7,0 (eingestellt mit NaOH) und einer Temperatur von 20 °C. Die Komponente b) kann auch eine Mischung von wasserlöslichen vernetzten Acrylsäurehomopolymeren und/oder wasserlöslichen vernetzten Methacrylsäurehomopolymeren sein, sofern die Mischungen in Form der genannten Lösung die genannte Viskosität von 1000 bis 13 000 mPa · s, vorzugsweise 2000 bis 7000 mPa · s, und ein mittleres Molekulargwicht von 750 000 bis 1 250 000 besitzen. Die Komponente b) ist vorzugsweise ein Acrylsäure- oder Methacrylsäurehomopolymer allein mit den genannten Werten von Molekulargewicht und Viskosität. Es versteht sich von selbst, daß das vernetzte Homopolymerisat der Acrylsäure oder Methacrylsäure auch in Form der entsprechenden Acrylate, vorzugsweise Alkalimetallacrylate (das Alkalimetall ist vorzugsweise Kalium oder Natrium), eingesetzt werden kann. Die erwähnte Wasserlöslichkeit der Acrylhomopolymeren liegt dann vor, wenn beim Auflösen von bis zu 10 g Acrylhomopolymer in 1000 g Wasser bei etwa 20 °C nach Einstellen eines pH-Wertes von 7 mit einem Alkalimetallhydroxid eine klare Lösung erhalten wird. Erfindungsgemäß geeignete vernetzte Acrylsäure- oder Methacrylsäurehomopolymere und deren Alkalimetallsalze sind im Handel erhältlich, zum Beispiel unter der Bezeichnung ®CARBOPOL von der Firma B.F. Goodrich Chemical GmbH, Deutschland. Unter den Begriffen Homopolymer der Acrylsäure oder Methacrylsäure und Acrylsäure- oder Methacrylsäurehomopolymer werden auch solche Acrylpolymere verstanden, die (neben Acrylsäure oder Methacrylsäure) bis zu 5 Mol.-%, vorzugsweise bis zu 3 Mol.-%, Comonomer-Einheiten (im Polymeren) von einem Comonomeren aus der Gruppe der Acrylsäure-C₆ bis C₂₂-alkylester und Methacrylsäure-C₆ bis C₂₂-alkylester enthalten. Die (gesättigte) Alkylgruppe, die vorzugsweise 8 bis 18 Kohlenstoffatome hat, kann gerade oder verzweigt sein, wobei gerade bevorzugt ist. Beispiele für solche Comonomere sind n-Octylacrylat, n-Decylacrylat, Laurylacrylat, Myristylacrylat und Stearylacrylat sowie die entsprechenden Methacrylate.

Die Komponente c) ist ein nichtionisches Tensid vorzugsweise aus der Gruppe der Fettalkoholalkoxylate mit 1 bis 10 Molekülen (Einheiten), vorzugsweise 1 bis 5 Molekülen, von einem niedermolekularen Alkylenoxid. Als Alkylenoxid sind Ethylenoxid oder Propylenoxid bevorzugt, wobei Ethylenoxid besonders bevorzugt ist. Der Alkylrest im Fettalkohol enthält im allgemeinen 6 bis 22 Kohlenstoffatome, vorzugsweise 8 bis 18 Kohlenstoffatome, und kann gerade oder verzweigt sein, wobei gerade bevorzugt ist, und gesättigt oder ungesättigt mit vorzugsweise 1 bis 3 Doppelbindungen. Als Beispiele seien genannt: Octyl-, Decyl-, Dodecyl-, Isotridecyl- und Stearylalkohol, ferner Oleyl-, Cocosalkyl- und Talgalkylalkohol sowie ein Fettalkoholgemisch mit einem C₁₂-Alkylrest und C₁₄-Alkylrest (C₁₂/C₁₄-Fettalkohol) ethoxyliert mit 1 bis 10 mol, vorzugsweise 1 bis 5 mol, Ethylenoxid. Andere Tenside wie anionische Verbindungen aus der Gruppe der Alkylarylsulfonate sind ausgeschlossen.

Die Komponente d) ist ein wasserlösliches Salz einer anorganischen Säure, ein Salz einer aliphatischen oder aromatischen Carbonsäure, das heißt Mono-, Di- oder Polycarbonsäure, oder eine Mischung von solchen Salzen. Die anorganischen Säuren sind vorzugsweise Borsäuren, Halogenwasserstoffsäuren, Kieselsäuren, Phosphorsäuren, Schwefelsäuren und Salpetersäure. Aliphatische und aromatische Carbonsäuren sind vorzugsweise die C₁ bis C₃-Monocarbonsäuren wie Ameisensäure und Essigsäure, Dicarbonsäuren wie Oxalsäure, Hydroxycarbonsäuren wie Milchsäure und Citronensäure, und die Benzoesäure. Die wasserlöslichen Salzverbindungen sind im allgemeinen Alkalimetallsalze oder Erdalkalimetallsalze, wobei die Alkalimetallsalze von Natrium oder Kalium bevorzugt sind. Es versteht sich von selbst, daß zur Erreichung der angegebenen Salzverbindung in der Enteisungsflüssigkeit die entsprechende Säure allein eingesetzt werden kann, wenn in der Flüssigkeit zum Beispiel Natrium- oder Kaliumionen bereits vorliegen. Die empfohlenen Salzverbindungen sind niedermolekular und nichttensidisch, das heißt, sie sind nicht oberflächenaktiv, haben also keinen Einfluß auf die Oberflächenspannung der Glykol/Wasser-Mischung. Als geeignete Salze von anorganischen und organischen Säuren seien im einzelnen beispielhaft genannt die Natrium- oder Kaliumsalze von Borsäure, Phosphorsäure oder phosphoriger Säure, Schwefelsäure, Salpetersäure, Ameisensäure, Essigsäure, Oxalsäure, Milchsäure und Citronensäure.

Die Komponente e) ist ein Imidazol wie 1H-Imidazol, Methylimidazol und Benzimidazol, oder ein Triazol wie Benzotriazol und Tolyltriazol, oder eine Mischung aus den genannten Imidazolen und/oder Triazolen. Die genannten Triazole sind besonders bevorzugte Korrosionsinhibitoren.

Die Komponente f) ist vorzugsweise vollentsalztes Wasser. Der pH-Wert der erfindungsgemäßen Flüssigkeit liegt bei 7 bis 11, vorzugsweise 7 bis 9. Sofern dieser pH-Wert nicht ohnehin vorliegt, wird man ihn mit Hilfe von vorzugsweise Alkalimetallhydroxiden wie Natriumhydroxid und/oder Kaliumhydroxid einstellen. Zur pH-Wert-Einstellung können auch andere basische Verbindungen eingesetzt werden, so zum Beispiel Alkylamine wie Butylamin, Hexylamin, Octylamin oder Isononylamin und/oder Alkanolamine wie Mono-, Di- oder Triethanolamin.

Die Herstellung der erfindungsgemäßen Enteisungsflüssigkeit erfolgt durch Zusammenmischen der einzelnen Komponenten in beliebiger Reihenfolge, was zum Beispiel in einem mit Rührer ausgestatteten Behälter bei Raumtemperatur (15 bis 30 °C) vorgenommen werden kann.

Die erfindungsgemäße Enteisungsflüssigkeit vom Typ II erfüllt die eingangs erwähnten Forderungen in einem hohen Ausmaß. Mit der gezielt eingesetzten Salzverbindung in Kombination mit dem speziellen Verdicker und nichtionischem Tensid wird auch im Falle einer hohen Ruheviskosität der Enteisungsflüssigkeit, die eine lange Holdovertime gewährleistet, ein gutes Abfließverhalten erreicht. Die erfindungsgemäße Kombination hebt den Gegensatz in den beiden Eigenschaften, Holdovertime und Abfließverhalten, auf. Dieses überraschende Ergebnis resultiert offensichtlich von einem unerwarteten Synergismus zwischen dem niedrig- bis mittelmolekularen Verdicker, nichtionischem Tensid und Salz. Ihre gegenseitige Beeinflussung führt sowohl zu einer langen Wiedervereisungsschutzzeit als auch zu einer markanten Abnahme der Viskosität bei zunehmender Scherung und damit zum geforderten Abfließverhalten.

Die Erfindung wird mit den folgenden erfindungsgemäßen Beispielen und Vergleichsbeispielen noch näher erläutert.

Um die Wirkung von Acrylsäurehomopolymeren unterschiedlichen Molekulargewichts bezüglich Holdovertime und Abfließverhalten vergleichen zu können, wurde in den erfindungsgemäßen Beispielen und in den dazugehörigen Vergleichsbeispielen jeweils so viel Verdicker eingesetzt, daß die beiden Enteisungsflüssigkeiten die gleiche Grundviskosität hatten, das ist die Viskosität bei 20 °C und 0,3 Upm. Vergleicht man zum Beispiel das erfindungsgemäße Beispiel 1 und das Vergleichsbeispiel 1, so fällt die beträchtlich längere Holdovertime beim erfindungsgemäßen Beispiel 1 auf, zumal die Viskositätswerte bei 0 °C und -10 °C wesentlich niedriger sind als beim Vergleichsbeispiel 1. Dies ist ein völlig unerwartetes Ergebnis. Die Enteisungsflüssigkeit des Beispiels 1 hat also im Vergleich zur Enteisungsflüssigkeit des Vergleichsbeispiels trotz der niedrigen Viskosität eine längere Holdovertime und aufgrund der niedrigen Viskosität ein gutes Abfließverhalten.

### Beispiel 1

Es wird eine Typ-II-Flugzeugenteisungsflüssigkeit mit der folgenden Zusammensetzung und gemäß folgendem Vorgehen hergestellt:
- 50,00 Gew.-%: 1,2-Propylenglykol
- 0,17 Gew.-%: vernetztes Acrylsäurehomopolymer mit einem mittleren Molekulargewicht von circa 1 250 000 und einer Viskosität von 6050 mPa · s in einer 0,5gew.%igen wäßrigen Lösung mit einem pH-Wert von 7,0 (eingestellt mit NaOH), gemessen mit einem Brookfield-Viskosimeter bei 20 Upm und 20 °C
- 0,10 Gew.-%: Fettalkoholethoxylat aus einem C₁₂-Alkohol und 2 mol Ethylenoxid
- 0,10 Gew.-%: Natriumnitrat
- 0,05 Gew.-%: Benzotriazol
Rest Wasser auf 100 Gew.-%

Das Homopolymerisat sowie Benzotriazol, das Tensid und das Natriumnitrat werden in Wasser bei 20 °C unter Rühren gelöst. Anschließend wird das 1,2-Propylenglykol zugegeben und mit Natriumhydroxid der pH-Wert auf 7,2 eingestellt.

Die erhaltene Enteisungsflüssigeit wird bezüglich Viskosität und Holdovertime getestet. Die Ergebnisse sind nachstehend zusammengefaßt:
- Holdovertime (nach dem Water Spray Endurance Test bei -5 °C): 52 Minuten
- Viskositätswerte bei +20 °C, 0 °C, -10 °C und bei jeweils 0,3 Upm (0,084 s⁻¹ Schergeschwindigkeit) und 30 Upm (8,4 s⁻¹):

| Temperatur [°C] | Viskosität [mPa · s] | |
|---|---|---|
| | 0,3 Upm | 30 Upm |
| +20 | 6000 | 480 |
| 0 | 6400 | 670 |
| -10 | 5000 | 810 |

### Vergleichsbeispiel

Es wird eine Typ-II-Flugzeugenteisungsflüssigkeit mit der folgenden Zusammensetzung und gemäß folgendem Vorgehen hergestellt:
- 50,00 Gew.-%: 1,2-Propylenglykol
- 0,30 Gew.-%: vernetztes Acrylsäurehomopolymer mit einem mittleren Molekulargewicht von circa 3 000 000 und einer Viskosität von 23 750 mPa · s in einer 0,5gew.%igen wäßrigen Lösung mit einem pH-Wert von 7,0 (eingestellt mit NaOH), gemessen mit einem Brookfield-Viskosimeter bei 20 Upm und 20 °C
- 0,10 Gew.-%: Fettalkoholethoxylat aus einem C₁₂-Alkohol und 2 mol Ethylenoxid
- 0,10 Gew.-%: Natriumnitrat
- 0,05 Gew.-%: Benzotriazol
Rest Wasser auf 100 Gew.-%

Das Homopolymerisat sowie Benzotriazol, das Tensid und das Natriumnitrat werden in Wasser bei 20 °C unter Rühren gelöst. Anschließend wird das 1,2-Propylenglykol zugegeben und mit Natriumhydroxid der pH-Wert auf 7,2 eingestellt.

Die erhaltene Enteisungsflüssigeit wird bezüglich Viskosität und Holdovertime getestet. Die Ergebnisse sind nachstehend zusammengefaßt:
- Holdovertime (nach dem Water Spray Endurance Test bei -5 °C): 43 Minuten
- Viskositätswerte bei +20 °C, 0 °C, -10 °C und bei jeweils 0,3 Upm (0,084 s⁻¹ Schergeschwindigkeit) und 30 Upm (8,4 s⁻¹):

| Temperatur [°C] | Viskosität [mPa · s] | |
|---|---|---|
| | 0,3 Upm | 30 Upm |
| +20 | 6000 | 620 |
| 0 | 10800 | 1120 |
| -10 | 12400 | 1490 |

### Beispiel 2

Es wird eine Typ-II-Flugzeugenteisungsflüssigkeit mit der folgenden Zusammensetzung und gemäß folgendem Vorgehen hergestellt:
- 50,00 Gew.-%: 1,2-Propylenglykol
- 0,20 Gew.-%: vernetztes Acrylsäurehomopolymer mit einem mittleren Molekulargewicht von circa 750 000 und einer Viskosität von 3000 mPa · s in einer 0,5gew.%igen wäßrigen Lösung mit einem pH-Wert von 7,0 (eingestellt mit NaOH), gemessen mit einem Brookfield-Viskosimeter bei 20 Upm und 20 °C
- 0,10 Gew.-%: Fettalkoholethoxylat aus einem C₁₂-Alkohol und 2 mol Ethylenoxid
- 0,05 Gew.-%: Natriumsulfat
- 0,05 Gew.-%: Benzotriazol
Rest Wasser auf 100 Gew.-%

Die Herstellung erfolgt wie in Bespiel 1 beschrieben.

Die erhaltene Enteisungsflüssigeit wird bezüglich Viskosität und Holdovertime getestet. Die Ergebnisse sind nachstehend zusammengefaßt:
- Holdovertime (nach dem Water Spray Endurance Test bei -5 °C): 55 Minuten
- Viskositätswerte bei +20 °C, 0 °C, -10 °C und bei jeweils 0,3 Upm (0,084 s⁻¹ Schergeschwindigkeit) und 30 Upm (8,4 s⁻¹):

| Temperatur [°C] | Viskosität [mPa · s] | |
|---|---|---|
| | 0,3 Upm | 30 Upm |
| +20 | 6000 | 370 |
| 0 | 1800 | 360 |
| -10 | 2400 | 640 |

### Beispiel 3

Es wird eine Typ-II-Flugzeugenteisungsflüssigkeit mit der folgenden Zusammensetzung und gemäß folgendem Vorgehen hergestellt:
- 50,00 Gew.-%: 1,2-Propylenglykol
- 0,13 Gew.-%: vernetztes Acrylsäurehomopolymer mit einem mittleren Molekulargewicht von circa 1 250 000 und einer Viskosität von 4400 mPa · s in einer 0,5gew.%igen wäßrigen Lösung mit einem pH-Wert von 7,0 (eingestellt mit NaOH), gemessen mit einem Brookfield-Viskosimeter bei 20 Upm und 20 °C
- 0,10 Gew.-%: Fettalkoholethoxylat aus einem C₁₄-Alkohol und 4 mol Ethylenoxid
- 0,08 Gew.-%: Natriumdihydrogenphosphat
- 0,05 Gew.-%: Benzotriazol
Rest Wasser auf 100 Gew.-%

Die Herstellung erfolgt wie in Bespiel 1 beschrieben.

Die erhaltene Enteisungsflüssigeit wird bezüglich Viskosität und Holdovertime getestet. Die Ergebnisse sind nachstehend zusammengefaßt:
- Holdovertime (nach dem Water Spray Endurance Test bei -5 °C): 49 Minuten
- Viskositätswerte bei +20 °C, 0 °C, -10 °C und bei jeweils 0,3 Upm (0,084 s⁻¹ Schergeschwindigkeit) und 30 Upm (8,4 s⁻¹):

| Temperatur [°C] | Viskosität [mPa · s] | |
|---|---|---|
| | 0,3 Upm | 30 Upm |
| +20 | 6000 | 480 |
| 0 | 8000 | 820 |
| -10 | 10600 | 1150 |

### Beispiel 4

Es wird eine Typ-II-Flugzeugenteisungsflüssigkeit mit der folgenden Zusammensetzung und gemäß folgendem Vorgehen hergestellt:
- 50,00 Gew.-%: 1,2-Propylenglykol
- 0,25 Gev.-%: vernetztes Acrylsäurecopolymer mit einem mittleren Molekulargewicht von circa 1 000 000, das 2 Mol-% Methacrylsäuredodecylester als Comonomer einpolymerisiert hat, Molprozente bezogen auf das gesamte Polymer. Das Polymer hat eine Viskosität von 8000 mPa · s in einer 0,5gew.%igen wäßrigen Lösung mit einem pH-Wert von 7,0 (eingestellt mit NaOH), gemessen mit einem Brookfield-Viskosimeter bei 20 Upm und 20 °C.
- 0,10 Gew.-%: Fettalkoholethoxylat aus einem C₁₆-Alkohol und 7 mol Ethylenoxid
- 0,08 Gew.-%: Natriumdihydrogenphosphat
- 0,05 Gew.-%: Benzotriazol
Rest Wasser auf 100 Gew.-%

Die Herstellung erfolgt wie in Bespiel 1 beschrieben.

Die erhaltene Enteisungsflüssigeit wird bezüglich Viskosität und Holdovertime getestet. Die Ergebnisse sind nachstehend zusammengefaßt:
- Holdovertime (nach dem Water Spray Endurance Test bei -5 °C): 58 Minuten
- Viskositätswerte bei +20 °C, 0 °C, -10 °C und bei jeweils 0,3 Upm (0,084 s⁻¹ Schergeschwindigkeit) und 30 Upm (8,4 s⁻¹):

| Temperatur [°C] | Viskosität [mPa · s] | |
|---|---|---|
| | 0,3 Upm | 30 Upm |
| +20 | 6200 | 600 |
| 0 | 8000 | 750 |
| -10 | 6600 | 710 |

## Patentansprüche

1. Polymerverdickte Enteisungsmittel und Vereisungsschutzmittel für Flugzeuge bestehend im wesentlichen aus
a) 35 bis 70 Gew.-% von mindestens einem Alkylenglykol mit 2 bis 3 Kohlenstoffatomen oder Oxalkylenglykol mit 4 bis 6 Kohlenstoffatomen oder einer Mischung davon,
b) 0,05 bis 1,5 Gew.-% von einem wasserlöslichen vernetzten Homopolymer der Acrylsäure oder Methacrylsäure oder einer Mischung von solchen Homopolymeren, wobei das Homopolymer und die Mischung jeweils ein mittleres Molekulargewicht von 750 000 bis 1 250 000 hat und jeweils in Form einer 0,5gew.%igen wäßrigen Lösung mit einem pH-Wert von 7,0 und einer Temperatur von 20 °C eine Viskosität von 1000 bis 13 000 mPa · s aufweist, gemessen mit einem Brookfield-Viskosimeter bei 20 Upm,
c) 0,02 bis 1,5 Gew.-% von mindestens einem nichtionischen Tensid, gebildet aus einem Alkohol mit 6 bis 22 Kohlenstoffatomen, der mit 1 bis 10 Molekülen von einem niedermolekularen Alkylenoxid umgesetzt ist,
d) 0,03 bis 1 Gew.-% von mindestens einer wasserlöslichen Salzverbindung von einer anorganischen Säure oder einer Carbonsäure oder einer Mischung davon,
e) 0,01 bis 1 Gew.-% von mindestens einer Imidazolverbindung oder einer Triazolverbindung oder einer Mischung davon als Korrosionsinhibitor und
f) Wasser als Rest auf 100 Gew.-%,
Gewichtsprozente bezogen auf das Mittel.

2. Mittel nach Anspruch 1, **dadurch gekennzeichnet, daß** die Komponente b) ein wasserlösliches vernetztes Homopolymer der Acrylsäure oder Methacrylsäure oder einer Mischung von solchen Homopolymeren ist, wobei das Homopolymer und die Mischung jeweils ein mittleres Molekulargewicht von 750 000 bis 1 250 000 hat und jeweils in Form einer 0,5gew.%igen wäßrigen Lösung mit einem pH-Wert von 7,0 und einer Temperatur von 20 °C eine Viskosität von 2000 bis 7000 mPa · s aufweist, gemessen mit einem Brookfield-Viskosimeter bei 20 Upm.

3. Mittel nach Anspruch 1 oder 2, **dadurch gekennzeichnet, daß** die Komponente c) ein Fettalkoholalkoxylat mit 8 bis 18 Kohlenstoffatomen im Fettalkohol und mit 1 bis 5 Ethylenoxid-Einheiten oder Propylenoxid-Einheiten ist.

4. Mittel nach Anspruch 1 oder 2, **dadurch gekennzeichnet, daß** die Komponente c) ein Fettalkoholethoxylat mit 8 bis 18 Kohlenstoffatomen im Fettalkohol und mit 1 bis 5 Ethylenoxid-Einheiten ist.

5. Mittel nach einem oder mehreren der Ansprüche 1 bis 4, **dadurch gekennzeichnet, daß** die Komponente d) ein wasserlösliches Salz ist von einer Borsäure, Halogenwasserstoffsäure, Kieselsäure, Phosphorsäure, Schwefelsäure oder Salpetersäure als anorganische Säuren oder von einer C₁ bis C₃-Monocarbonsäure, Dicarbonsäure, Hydroxycarbonsäure oder Benzoesäure als aliphatische oder aromatische Carbonsäuren.

6. Mittel nach einem oder mehreren der Ansprüche 1 bis 4, **dadurch gekennzeichnet, daß** die Komponente d) ein wasserlösliches Alkalimetallsalz ist von Borsäure, Phosphorsäure, phosphoriger Säure, Schwefelsäure, Salpetersäure, Ameisensäure, Essigsäure, Oxalsäure, Milchsäure oder Citronensäure.

7. Mittel nach einem oder mehreren der Ansprüche 1 bis 6, **dadurch gekennzeichnet, daß** es die Komponenten a) bis f) in den nachstehend angegebenen Mengen enthält:
a) 40 bis 60 Gew.-%,
b) 0,1 bis 1 Gew.-%,
c) 0,05 bis 1 Gew.-%,
d) 0,05 bis 0,4 Gew.-%,
e) 0,03 bis 0,7 Gew.-% und
f) Wasser als Rest auf 100 Gew.-%.

8. Mittel nach Anspruch 1, bestehend im wesentlichen aus
a) 35 bis 70 Gew.-% Propylenglykol,
b) 0,05 bis 1,5 Gew.-% von einem wasserlöslichen vernetzten Homopolymer der Acrylsäure oder Methacrylsäure oder einer Mischung von solchen Homopolymeren, wobei das Homopolymer und die Mischung jeweils ein mittleres Molekulargewicht von 750 000 bis 1 250 000 hat und jeweils in Form einer 0,5gew.%igen wäßrigen Lösung mit einem pH-Wert von 7,0 und einer Temperatur von 20 °C eine Viskosität von 2000 bis 7000 mPa · s aufweist, gemessen mit einem Brookfield-Viskosimeter bei 20 Upm,
c) 0,02 bis 1,5 Gew.-% von einem Fettalkoholethoxylat mit 8 bis 18 Kohlenstoffatomen im Fettalkohol und mit 1 bis 5 Ethylenoxid-Einheiten,
d) 0,03 bis 1 Gew.-% von einem wasserlöslichen Alkalimetallsalz von Borsäure, Phosphorsäure, phosphoriger Säure, Schwefelsäure, Salpetersäure, Ameisensäure, Essigsäure, Oxalsäure, Milchsäure oder Citronensäure,
e) 0,01 bis 1 Gew.-% von Benzotriazol oder Tolyltriazol und
f) Wasser als Rest auf 100 Gew.-%,

9. Mittel nach Anspruch 8, **dadurch gekennzeichnet, daß** es die Komponenten a) bis f) in den nachstehend angegebenen Mengen enthält:
a) 40 bis 60 Gew.-%,
b) 0,1 bis 1 Gew.-%,
c) 0,05 bis 1 Gew.-%,
d) 0,05 bis 0,4 Gew.-%,
e) 0,03 bis 0,7 Gew.-% und
f) Wasser als Rest auf 100 Gew.-%.

## Claims

1. A polymer-thickened deicing and anti-icing composition for aircraft, consisting essentially of
a) from 35 to 70% by weight of at least one alkylene glycol having 2 to 3 carbon atoms or oxalkylene glycol having 4 to 6 carbon atoms, or a mixture thereof,
b) from 0.05 to 1.5% by weight of a water-soluble crosslinked homopolymer of acrylic acid or methacrylic acid, or of a mixture of such homopolymers, the homopolymer and the mixture each having a mean molecular weight of from 750,000 to 1,250,000 and a viscosity, each in the form of a 0.5% strength by weight aqueous solution with a pH of 7.0 and a temperature of 20°C, of from 1000 to 13,000 mPa·s, measured with a Brookfield viscometer at 20 rpm,
c) from 0.02 to 1.5% by weight of at least one nonionic surfactant formed from an alcohol having 6 to 22 carbon atoms which is reacted with from 1 to 10 molecules of a low molecular mass alkylene oxide,
d) from 0.03 to 1% by weight of at least one water-soluble salt compound of an inorganic acid or a carboxylic acid or a mixture thereof,
e) from 0.01 to 1% by weight of at least one imidazole compound or a triazole compound or a mixture thereof as corrosion inhibitor, and
f) water as remainder to 100% by weight,
percentages by weight being based on the composition.

2. A composition as claimed in claim 1, wherein component b) is a water-soluble crosslinked homopolymer of acrylic acid or methacrylic acid, or a mixture of such homopolymers, the homopolymer and the mixture each having a mean molecular weight of from 750,000 to 1,250,000 and a viscosity, each in the form of a 0.5% strength by weight aqueous solution having a pH of 7.0 and a temperature of 20°C, of from 2000 to 7000 mPa·s, measured with a Brookfield viscometer at 20 rpm.

3. A composition as claimed in claim 1 or 2, wherein component c) is a fatty alcohol alkoxylate having 8 to 18 carbon atoms in the fatty alcohol and having 1 to 5 ethylene oxide units or propylene oxide units.

4. A composition as claimed in claim 1 or 2, wherein component c) is a fatty alcohol ethoxylate having 8 to 18 carbon atoms in the fatty alcohol and having 1 to 5 ethylene oxide units.

5. A composition as claimed in one or more of claims 1 to 4, wherein component d) is a water-soluble salt of a boric acid, hydrohalic acid, silicic acid, phosphoric acid, sulfuric acid or nitric acid as inorganic acids or of a C₁-C₃-monocarboxylic acid, dicarboxylic acid, hydroxycarboxylic acid or benzoic acid as aliphatic or aromatic carboxylic acids.

6. A composition as claimed in one or more of claims 1 to 4, wherein component d) is a water-soluble alkali metal salt of boric acid, phosporic acid, phosphorous acid, sulfuric acid, nitric acid, formic acid, acetic acid, oxalic acid, lactic acid or citric acid.

7. A composition as claimed in one or more of claims 1 to 6, which contains components a) to f) in the following amounts:
a) from 40 to 60% by weight,
b) from 0.1 to 1% by weight,
c) from 0.05 to 1% by weight,
d) from 0.05 to 0.4% by weight,
e) from 0.03 to 0.7% by weight, and
f) water as remainder to 100% by weight.

8. A composition as claimed in claim 1, consisting essentially of
a) from 35 to 70% by weight of propylene glycol,
b) from 0.05 to 1.5% by weight of a water-soluble crosslinked homopolymer of acrylic acid or methacrylic acid, or of a mixture of such homopolymers, the homopolymer and the mixture each having a mean molecular weight of from 750,000 to 1,250,000 and a viscosity, each in the form of a 0.5% strength by weight aqueous solution having a pH of 7.0 and a temperature of 20°C, of from 2000 to 7000 mPa·s, measured with a Brookfield viscometer at 20 rpm,
c) from 0.02 to 1.5% by weight of a fatty alcohol ethoxylate having 8 to 18 carbon atoms in the fatty alcohol and having 1 to 5 ethylene oxide units,
d) from 0.03 to 1% by weight of a water-soluble alkali metal salt of boric acid, phosphoric acid, phosphorous acid, sulfuric acid, nitric acid, formic acid, acetic acid, oxalic acid, lactic acid or citric acid,
e) from 0.01 to 1% by weight of benzotriazole or tolyltriazole, and
f) water as remainder to 100% by weight.

9. A composition as claimed in claim 8, which contains components a) to f) in the following amounts:
a) from 40 to 60% by weight,
b) from 0.1 to 1% by weight,
c) from 0.05 to 1% by weight,
d) from 0.05 to 0.4% by weight,
e) from 0.03 to 0.7% by weight, and
f) water as remainder to 100% by weight.

## Revendications

1. Agent de dégivrage épaissi par polymère et agent anti-givre pour les avions constitué essentiellement de
a) 35 à 70 % en poids d'au moins un alkylèneglycol avec 2 à 3 atomes de carbone ou oxalkylèneglycol avec 4 à 6 atomes de carbone ou un mélange de ceux-ci,
b) 0,05 à 1,5 % en poids d'un homopolymère hydrosoluble réticulé de l'acide acrylique ou de l'acide méthacrylique ou d'un mélange de tels homo-polymères, dans lequel l'homopolymère et le mélange ont respectivement une masse moléculaire moyenne de 750 000 jusqu'à 1 250 000 et présentent respectivement sous la forme d'une solution aqueuse à 0,5 % en poids avec une valeur de pH de 7,0 et à une température de 20°C une viscosité comprise entre 1000 et 13 000 mPa·s, mesurée avec un viscosimètre Brookfield à 20 tr/min,
c) 0,02 à 1,5 % en poids d'au moins un agent tensioactif non ionique, formé à partir d'un alcool avec 6 à 22 atomes de carbone, qui est mis à réagir avec 1 à 10 molécules d'un oxyde d'alkylène de bas poids moléculaire,
d) 0,03 à 1 % en poids d'au moins un sel hydrosoluble d'un acide inorganique ou d'un acide carboxylique ou d'un mélange de ceux-ci,
e) 0,01 à 1 % en poids d'au moins un composé imidazole ou d'un composé triazole ou d'un mélange de ceux-ci comme inhibiteur de corrosion et
f) de l'eau comme complément à 100 % en poids,
les pourcentages en poids se rapportent à l'agent.

2. Agent selon la revendication 1, **caractérisé en ce que** le composant b) est un homopolymère hydrosoluble réticulé de l'acide acrylique ou de l'acide méthacrylique ou un mélange de tels homopolymères, dans lequel l'homopolymère et le mélange ont respectivement une masse moléculaire moyenne de 750 000 à 1 250 000 et présentent respectivement sous la forme d'une solution aqueuse à 0,5 % en poids avec une valeur de pH de 7,0 et à une température de 20°C une viscosité comprise entre 2000 et 7 000 mPa·s, mesurée avec un viscosimètre Brookfield à 20 tr/min,

3. Agent selon la revendication 1 ou 2, **caractérisé en ce que** le composant c) est un alcoxylate d'alcool gras avec 8 à 18 atomes de carbone dans l'alcool gras et avec 1 à 5 motifs d'oxyde d'éthylène ou motifs d'oxyde de propylène.

4. Agent selon la revendication 1 ou 2, **caractérisé en ce que** le composant c) est un éthoxylate d'alcool gras avec 8 à 18 atomes de carbone dans l'alcool gras et avec 1 à 5 motifs d'oxyde d'éthylène.

5. Agent selon une ou plusieurs des revendications 1 à 4, **caractérisé en ce que** le composant d) est un sel hydrosoluble d'un acide borique, d'un acide halogéno-hydrique, d'acide de silice, d'acide phosphorique, d'acide sulfurique ou d'acide nitrique comme acides inorganiques ou d'un acide monocarboxylique en C₁ à C₃, d'un acide dicarboxylique, d'un acide hydroxycarboxylique ou d'un acide benzoïque comme acides carboxyliques aliphatiques ou aromatiques.

6. Agent selon une ou plusieurs des revendications 1 à 4, **caractérisé en ce que** le composant d) est un sel hydrosoluble de métal alcalin de l'acide borique, de l'acide phosphorique, de l'acide phosphoreux, de l'acide sulfurique, de l'acide nitrique, de l'acide formique, de l'acide acétique, de l'acide oxalique, de l'acide lactique ou de l'acide citrique.

7. Agent selon une ou plusieurs des revendications 1 à 6, **caractérisé en ce qu'**il contient les composants a) à f) dans les quantités indiquées ci-dessous :
a) 40 à 60 % en poids,
b) 0,1 à 1 % en poids,
c) 0,05 à 1 % en poids,
d) 0,05 à 0,4 % en poids,
e) 0,03 à 0,7 % en poids et
f) de l'eau comme complément à 100 % en poids.

8. Agent selon la revendication 1, constitué essentiellement de
a) 35 à 70 % en poids de propylèneglycol,
b) 0,05 à 1,5 % en poids d'un homopolymère hydrosoluble réticulé de l'acide acrylique ou de l'acide méthacrylique ou d'un mélange de tels homopolymères, dans lequel l'homopolymère et le mélange présentent respectivement une masse moléculaire moyenne de 750 000 à 1 250 000 et sont respectivement sous la forme d'une solution aqueuse à 0,5 % en poids avec une valeur de pH de 7,0 et à une température de 20°C une viscosité comprise entre 2000 et 7 000 mPa·s, mesurée avec un viscosimètre Brookfield à 20 tr/min,
c) 0,02 à 1,5 % en poids d'au moins d'un éthoxylate d'alcool gras avec.8 à 18 atomes de carbone et avec 1 à 5 motifs d'oxyde d'éthylène,
d) 0,03 à 1 % en poids d'un sel hydrosoluble de métal alcalin de l'acide borique, de l'acide phosphorique, de l'acide phosphoreux, de l'acide sulfurique, de l'acide nitrique, de l'acide formique, de l'acide acétique, de l'acide oxalique, de l'acide lactique ou de l'acide citrique,
e) 0,01 à 1 % en poids de benzotriazole ou de tolyltriazole et
f) de l'eau comme complément à 100 % en poids.

9. Agent selon la revendication 8, **caractérisé en ce qu'**il contient les composants a) à f) dans les quantités indiquées ci-dessous :
a) 40 à 60 % en poids,
b) 0,1 à 1 % en poids,
c) 0,05 à 1 % en poids,
d) 0,05 à 0,4 % en poids,
e) 0,03 à 0,7 % en poids et
f) de l'eau comme complément à 100 % en poids.
